**Europäisches Patentamt**

**European Patent Office**

**Office européen des brevets**

(19)

(11) Veröffentlichungsnummer : **0 103 534**
**B1**

(12) ## EUROPÄISCHE PATENTSCHRIFT

(45) Veröffentlichungstag der Patentschrift :
30.11.88

(21) Anmeldenummer : 83710057.7

(22) Anmeldetag : 31.08.83

(51) Int. Cl.⁴ : **F 27 D 11/08, H 05 B   7/20**

(54) **Pfannenofen.**

(30) Priorität : 09.09.82 SE 8205134

(43) Veröffentlichungstag der Anmeldung :
21.03.84 Patentblatt 84/12

(45) Bekanntmachung des Hinweises auf die Patenterteilung : 30.11.88 Patentblatt 88/48

(84) Benannte Vertragsstaaten :
**CH DE GB LI**

(56) Entgegenhaltungen :
**DE-A- 2 708 227**
**FR-A- 1 362 406**
**US-A- 3 793 468**
**US-A- 4 336 411**

(73) Patentinhaber : **ASEA AB**
**S-721 83 Västeras (SE)**

(72) Erfinder : **Stenkvist, Sven-Einar, Dipl.-Ing.**
**Ormbergssvängen 10**
**S-72462 Västeras (SE)**

(74) Vertreter : **Boecker, Joachim, Dr.-Ing.**
**Rathenauplatz 2-8**
**D-6000 Frankfurt a.M. 1 (DE)**

EP 0 103 534 B1

**Beschreibung**

Die Erfindung betrifft ein Verfahren zum Betrieb eines Pfannenofens, der mit einer zentral angeordneten, zur Heizung mit Gleichstrom dienenden Lichtbogenelektrode, mit einer im wesentlichen elektrisch nicht leitenden Auskleidung und mit mindestens einem im Boden oder im unteren Wandbereich der Pfanne symmetrisch zur Lichtbogenelektrode angeordneten Bodenkontakt ausgerüstet ist. Ein Pfannenofen dieser Art, wobei der Bodenkontakt im unteren Wandbereich der Pfanne angeordnet ist, ist aus der US-A-4 336 411 bekannt.

Ein Pfannenofen mit Gleichstrom-Lichtbogenerwärmung ist mit einer zentral angeordneten Graphitelektrode ausgerüstet, die an den negativen Pol der Gleichspannungsquelle angeschlossen wird, sowie mit einem Bodenkontakt, der an den positiven Pol der Gleichspannungsquelle angeschlossen wird. Der die Schmelze durchfließende Strom breitet sich dabei, vom Fußpunkt des Lichtbogens ausgehend, symmetrisch nach unten bis zu dem Bodenkontakt hin aus. Die durch die Stromverteilung erzeugten elektromagnetischen Kräfte verursachen dabei eine Umrührung der Schmelze, die so gerichtet ist, daß die Schmelze in der Mitte unter dem Lichtbogen nach unten strömt, längs der Pfannenwände nach oben strömt und an der Badoberfläche von außen nach innen zum Lichtbogen strömt. Ein Nachteil bei solchen Pfannenöfen besteht darin, daß die Auskleidung infolge der Hitzestrahlung des Lichtbogens stark beansprucht und entsprechend schnell verschlissen wird. Außerdem kann der Lichtbogen häufig unruhige Bewegungen ausführen, welche den Verschleiß der Auskleidung erhöhen. Man hat Versuche unternommen, die Energieaufnahme bei solchen Pfannenöfen zu vergrößern.

Aus der FR-A-1 362 406 ist eine Anordnung zum Umschmelzen einer Lichtbogenelektrode bekannt, wobei die Umschmelzung in einem elektrisch leitenden Gefäß stattfindet, in welchem suksesiv von unten nach oben das umgeschmolzene Metall erstarrt. Am oberen Ende des umgeschmolzenen Metalls befindet sich ein nach unten gerichteter flüssiger Schmelzenkegel. Um das Schmelzengefäß herum ist eine Spule angeordnet, die mit dem Umschmelzvorgang nach oben wandert und stets im Bereich des flüssigen Schmelzenkegels liegt. Diese Spule erzeugt ein in der flüssigen Schmelze im wesentlichen vertikal verlaufendes magnetisches Feld, daß in Zusammenwirken mit den horizontalen Stromkomponenten eine in Umfangsrichtung gerichtete Rührkraft auf die Schmelze ausübt, wodurch die Struktur der erstarrten Schmelze verbessert werden soll. Eine Veränderung der Oberflächenform der Schmelze ist durch diese Rührwirkung nicht beabsichtigt.

Aus der US-A-3 793 468 sind Lichtbogenöfen bekannt, bei denen mittels mindestens zweier separat erzeugter magnetischer Felder Einfluß auf den Lichtbogen beziehungsweise den flüssigen Teil des im Gefäß befindlichen Materials genommen wird. In den meisten Fällen wird dabei eines der separaten Felder durch eine Spule innerhalb der Spitze der Lichtbogenelektrode erzeugt. Andere Spulen zur Erzeugung weiterer Felder sind konzentrisch außen um das Ofengefäß angeordnet, wobei diese zum Teil sich über die gesamte achsiale Ofenhöhe erstrecken und zum Teil relativ kurz sind und in vertikaler Richtung des Ofens verschiebbar sind. Auch bei dieser bekannten Anordnung wird eine Beeinflussung der Oberfläche der flüssigen Schmelze nicht beabsichtigt.

Der Erfindung liegt die Aufgabe zugrunde, ein Verfahren zum Betrieb eines Pfannenofens der eingangs genannten Art zu entwickeln, bei dem der geschilderte Verschleiß der Ausfütterung vermindert und die Energieübertragung vom Lichtbogen auf die Schmelze verbessert wird.

Zur Lösung dieser Aufgabe wird ein Verfahren zum Betrieb eines Pfannenofens vorgeschlagen, welches erfindungsgemäß die im Anspruch 1 genannten Merkmale hat.

Eine vorteilhafte Ausgestaltung der Erfindung ist im Anspruch 2 genannt.

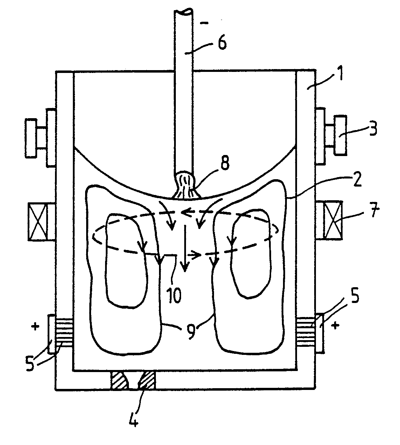

Der die Schmelze durchfließende Gleichstrom erzeugt für sich eine Umrührkraft, die sich im wesentlichen in vertikaler Richtung erstreckt (siehe die voll ausgezogenen Linien in der Figur). Die mit Gleichstrom gespeiste Spule erzeugt ein magnetisches Feld, das in Zusammenwirkung mit den Strömen eine in Umfangsrichtung wirkende Kraft (Tangentialkraft) F erzeugt, deren Größe und Richtung sich nach dem Biot-Savart'schen Gesetzt aus dem vektoriellen Produkt $\bar{F} \sim [\bar{B} \times \bar{J}]$ ergibt, wobei $\bar{B}$ der Vektor der magnetischen Induktion und $\bar{J}$ der Vektor der Stromdichte in der Schmelze ist. Diese Kraft F versetzt die Schmelze im wesentlichen in eine Rotationsbewegung um die Elektrodenlängsachse. Dies hat zur Folge, daß die Schmelzenoberfläche eine nach oben konkav gewölbte Form annimmt, wodurch die Schmelze einen zusätzlichen Schutz der Auskleidung gegen die Strahlung des Lichtbogens bildet, was einen geringeren Auskleidungsverschleiß zur Folge hat. Dies bedeutet eine Herabsetzung des Betriebs- bzw. Erneuerungskosten. Durch die Verformung der Schmelzenoberfläche wird gleichzeitig eine verbesserte Übertragung der Energie vom Lichtbogen auf die Schmelze erreicht, da ein größerer Teil der Wärmestrahlung ausgenutzt wird als bei horizontaler Schmelzenoberfläche.

Anhand des in der Figur gezeigten Beispiels eines Pfannenofens soll das Verfahren nach der Erfindung näher erläutert werden.

Die Figur zeigt eine Pfanne 1 für einen Pfannenofen, die mit Schmelze, wie z. B. Eisen- oder Stahlschmelze, gefüllt ist. Die Pfanne kann um die Achse 3 gekippt werden und hat im Boden ein Abstichloch 4 üblicher Art. Im Bodenbereich, um den unteren Teil der Pfannenwand, sind ein oder mehrere Bodenkontakte 5 angeordnet, die üblicherweise an den positiven Pol der Gleichstromquelle angeschlossen werden. Der Ofen ist mit einer zentral angeordneten Elektrode 6 aus Graphit oder des Söderbergtyps ausgerüstet. Um die Pfanne herum, beispielsweise in halber Höhe derselben oder höher, ist eine (oder mehrere) mit Gleichstrom gespeiste Spule 7 angeordnet. Die Elektrode 6 wird üblicherweise als Kathode geschaltet, also an den negativen Pol der speisenden Gleichspannung angeschlossen. Beim Betrieb fließt der Strom zwischen dem als Anode geschalteten Bodenkontakt 5 an den Seiten der Pfannenwand und der Lichtbogenelektrode 6. Der Strom breitet sich dabei vom Fußpunkt des Lichtbogens 8 auf der Schmelze symmetrisch bis zum Bodenkontakt 5 bis nach unten aus. Durch diese Stromverteilung und das entstehende magnetische Feld werden Kräfte auf die Schmelze ausgeübt, die eine Umrührung der Schmelze verursachen, die so gerichtet ist, daß sich die Schmelze in der Mitte unter dem Lichtbogen 8 nach unten bewegt, an den Wänden der Pfanne nach oben bewegt und an der Badoberfläche von außen nach innen zum Lichtbogen hin strömt. Dieser Strömungsverlauf ist durch die vollausgezogenen Stromlinien 9 in der Figur dargestellt.

Durch die Anordnung der Spule 7 um die Pfanne 1 herum kann durch Erregung der Spule ein Magnetfeld erzeugt werden, welches die Strompfade in der Schmelze kreuzt. Hierdurch werden elektromagnetische Kräfte erzeugt, welche die Schmelze in eine rotierende Bewegung versetzen, wie sie durch die gestrichelte Linie 10 in der Figur angedeutet ist. Diese Rotation überlagert sich der oben genannten Umrührbewegung.

Diese Rotation hat zur Folge, daß die Oberfläche der Schmelze nicht mehr eine horizontale Fläche bildet, sondern eine konkave Fläche bildet, wie aus der Figur ersichtlich ist. Die Rotation erfolgt um die Längsachse der Pfanne. Als Folge der konkaven Oberflächenform der Schmelze ist die Innenwand der Pfanne der Wärmestrahlung des Lichtbogens 8 in erheblich geringerem Maße ausgesetzt als bei horizontaler Schmelzenoberfläche. Statt der Wand trifft die Strahlung des Lichtbogens die konkave Schmelzenoberfläche, die sich schützend vor die Wand der Pfanne legt. Hierdurch wird einerseits eine effektivere Energieübertragung auf die Schmelze erreicht und andererseits der Verschleiß der Pfannenauskleidung herabgesetzt, was vorstehend bereits erwähnt worden ist.

Eine Überschlagsrechnung hat ergeben, daß bei einer Pfanne mit einem Innendurchmesser von zwei Metern der Niveauunterschied zwischen dem Rand und der Mitte der Schmelzenoberfläche etwa 500 mm beträgt, wenn die Schmelze mit etwa einer halben Umdrehung pro Sekunde rotiert. Dies genügt, um den Wandverschleiß und die Energieübertragung und damit die Betriebswirtschaftlichkeit des Pfannenraumes nachhaltig in dem oben erläuterten Sinne zu beeinflussen.

Die Pfanne kann aus unmagnetischem Material oder aus gewöhnlichem Kohlenstoffstahl gefertigt sein.

## Patentansprüche

1. Verfahren zum Betrieb eines Pfannenofens, der ausgerüstet ist mit einer zentral angeordneten, zur Heizung mit Gleichstrom dienenden Lichtbogenelektrode (6), mit einer im wesentlichen elektrisch nicht leitenden Auskleidung und mit mindestens einem im Boden oder im unteren Wandbereich der Pfanne symmetrisch zur Lichtbogenelektrode (6) angeordneten Bodenkontakt (5), wobei um die Pfanne herum eine Spule (7) in mindestens halber Höhe der Pfanne und unterhalb des Schmelzenspiegels angeordnet ist, welche Spule mit einem Gleichstrom solcher Größe gespeist wird, daß die Schmelze in eine in Umfangsrichtung rotierende Bewegung versetzt wird, die so stark ist, daß die Schmelze unter Bildung einer konkaven Schmelzenoberfläche im peripheren Bereich so weit nach oben gedrückt wird, daß die in Höhe des Lichtbogens liegenden Partien der Auskleidung durch die hochgedrückte Schmelze abgedeckt sind.

2. Verfahren nach Anspruch 1, dadurch gekennzeichnet, daß der Bodenkontakt um die Pfannenwand, oberhalb der Bodenfläche der Pfanne angeordnet ist.

## Claims

1. Method for operating a ladle furnace provided with a centrally arranged arcing electrode (6) for heating the melt through direct current, the ladle having a substantially electrically non-conducting lining and being provided with at least one bottom electrode (5) disposed in the bottom or in the lower wall portion symmetrically with the respect to the arcing electrode (6) and with a coil (7) surrounding the ladle at least half the ladle's height and below the surface of the melt, said coil being powered by a direct current of such a value as to bring about a movement of the melt in the circumferential direction having such a strength that the melt, while taking on a concave surface, is forced upwards in its peripheral area to such an extend that the portions of the lining which are located in the height of the arc are covered by the upwardly pressed melt.

2. Method according to Claim 1, characterized in that the bottom electrode is disposed around the ladle wall above the bottom surface of the ladle.

## Revendications

1. Procédé pour faire fonctionner un four à creuset, qui est muni d'une électrode d'arc électrique (6) disposée centralement et servant au chauffage par un courant électrique continu, d'un garnissage sensiblement non conducteur de l'électricité et d'au moins un contact de fond (5) disposé au fond ou à la partie inférieure de la paroi du creuset, symétriquement par rapport à l'électrode d'arc électrique (6), une bobine (7) étant disposée tout autour du creuset, au moins à mi-hauteur du creuset et en dessous de la face libre de la masse fondue, cette bobine étant alimentée par un courant électrique continu d'une intensité telle que la masse fondue est mise en un mouvement de rotation dans la direction périphérique, qui est si intense que la masse fondue est refoulée si loin vers le haut dans la partie périphérique, en formant une surface concave, que les parties du garnissage qui se trouvent au niveau de l'arc électrique sont recouvertes par la masse fondue refoulée vers le haut.

2. Procédé suivant la revendication 1, caractérisé en ce que le contact de fond est disposé autour de la paroi du creuset, au-dessus de la surface du fond du creuset.